# EUROPÄISCHE PATENTSCHRIFT

(11) **EP 0 779 173 B1**
(45) Veröffentlichungstag und Bekanntmachung des Hinweises auf die Patenterteilung: **28.02.2001**
(21) Anmeldenummer: 96114703.0
(22) Anmeldetag: 13.09.1996
(51) Int. Cl.: B60K 17/02

(54) **Antriebseinrichtung für ein Kraftfahrzeug**
Drive system for a motor vehicle
Dispositif d'entraînement pour véhicule à moteur

(30) Priorität: 14.12.1995 DE 19546707
(43) Veröffentlichungstag der Anmeldung: 18.06.1997
(73) Patentinhaber: Bayerische Motoren Werke Aktiengesellschaft, 80788 München (DE)
(72) Erfinder: Pour Abdolrahim, Rahim, Dr., 85748 Garching (DE); Mathiak, Detlef, Dr., 80939 München (DE)

(56) Entgegenhaltungen:
- FR-A- 2 473 433

## Beschreibung

Die Erfindung betrifft eine Antriebseinrichtung für ein Kraftfahrzeug nach dem Oberbegriff des Hauptanspruchs.

Eine bekannte Antriebseinrichtung für ein Kraftfahrzeug mit einem Automatikgetriebe besteht aus einer Antriebsmaschine, einem hydrodynamischen Wandler und einem automatisch geschalteten Planetengetriebe. Das von der Antriebsmaschine erzeugte Drehmoment wird durch den Wandler als Anfahrkupplung entsprechend den Betriebsbedingungen für den Antrieb des Kraftfahrzeugs angepaßt und an eine Eingangswelle des Planetengetriebes abgegeben. Im Getriebe erfolgt eine weitere Drehzahl-/Drehmomentanpassung. Das Drehmoment wird dann von einer Getriebeausgangswelle über eine Antriebswelle und ein Differential auf die angetriebenen Räder des Kraftfahrzeugs übertragen. Der hydrodynamische Wandler besitzt meist auch noch eine Wandler-Überbrückungskupplung, mit der die Wandlerfunktion im "quasi stationären" Betrieb der Antriebsmaschine nach dem Anfahrvorgang außer Betrieb gesetzt wird.

Ein hydrodynamischer Wandler trennt die Antriebsmaschine vom Getriebe bei stehendem Fahrzeug in der Fahrstufe D, erhöht den Komfort durch sanftes Anfahren, erhöht das Drehmoment bei Anfahr- und Beschleunigungsvorgängen durch Vergrößerung der Getriebespreizung und isoliert die Drehschwingungen der Antriebsmaschine. Desweiteren wird der Schaltruck während des automatischen Gangwechsels und auch bei Fehlfunktionen während des Gangwechsels reduziert.

Dabei hat ein hydrodynamischer Wandler den Nachteil eines schlechteren Wirkungsgrads, was den Benzinverbrauch erhöht, vor allem beim Fahren mit offener Wandler-Überbrückungskupplung. Trotz Erhöhung des Drehmoments durch den Wandler wird beim Anfahren ohne Festbremsung ein Teil des Motormomentes zur Beschleunigung der eigenen Masse verbraucht. Die Anfahrdynamik wird also schlechter. Im kalten Zustand ist der Wandlerwirkungsgrad sehr schlecht, was unter Umständen zu Anfahrproblemen in Verbindung mit Turbodieselmotoren führt, die dann z. B. Garagenauffahrten nicht mehr hochfahren können. Durch den Wandler wird das Getriebe schwerer und länger.

Die FR 2473433 A beschreibt eine Antriebseinrichtung für ein Kraftfahrzeug mit einem automatisch geschalteten Planetengetriebe zur Übertragung und Anpassung eines Drehmoments einer Antriebsmaschine an Betriebsbedingungen für den Antrieb des Kraftfahrzeugs. Das als Planetengetriebe ausgebildete Automatikgetriebe wird kombiniert mit einer als Reibkupplung ausgebildeten einzigen Anfahrkupplung. Der hydrodynamische Wandler entfällt. Hierdurch wird die Anfahrdynamik und der Kaltabfahrvorgang verbessert. Außerdem wird der Verbrauch gesenkt, das Getriebegewicht wird um 20 % und die Getriebelänge um etwa 15 % kleiner. Dadurch wird auch eine starke Verbesserung der Motor-Getriebe-Biegeschwingung und somit der Akkustik erreicht. Außerdem wird beim Anfahren das Kriechen des Fahrzeugs verhindert.

Aufgabe der Erfindung ist es, eine Antriebseinrichtung für ein Kraftfahrzeug bereitzustellen, die die oben genannten Nachteile des hydrodynamischen Wandlers in Verbindung mit einem als Planetengetriebe ausgebildeten Automatikgetriebe vermeidet und zusätzlich das Getriebegewicht und die Getriebelänge weiter senkt.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung wird als Anfahrkupplung eine Reibkupplung des Planetengetriebes verwendet. Das hat den Vorteil, daß eine im Getriebe bereits vorhandene Kupplung als Anfahrkupplung verwendet werden kann. Ebenso kann der bedarfsweise notwendige Schlupf zur Isolation der Drehschwingungen und Abfederung der Fehlschaltungen von den vorhandenen Kupplungen im Getriebe übernommen werden, wenn diese regelbar sind.

In einer bevorzugten Ausführung der Erfindung wird die Drehmomentübertragung über die Reibkupplung durch eine automatische Steuereinrichtung geregelt. Wenn die Reibkupplung während der Gangwechsel im Getriebe oder bei niedrigen Motordrehzahlen geregelt oder gesteuert mit vorgegebenen Relativdrehzahlen rutscht, ist es möglich, auf den Wandler zu verzichten, ohne Komforteinbußen hinzunehmen. Alle beschriebenen Funktionen des Wandlers, bis auf die Erhöhung des Drehmoments bei Anfahr- und Beschleunigungsvorgängen, werden durch die Einführung einer elektronisch geregelten oder gesteuerten Reibkupplung des Planetengetriebes erfüllt. Eine Erhöhung des Drehmoments beim Anfahren kann dann, wenn gewünscht, durch die Verkürzung der Hinterachsübersetzung erreicht werden.

Ein Ausführungsbeispiel der Erfindung ist in der nachfolgenden Beschreibung mit der zugehörigen Zeichnung näher dargestellt. Dabei zeigt
- Figur 1: einen Ausschnitt aus einem automatisch geschalteten Planetengetriebe mit einem hydrodynamischen Wandler gemäß dem Stand der Technik,
- Figur 2: zeigt dasselbe automatisch geschaltete Planetengetriebe, bei dem der hydrodynamische Wandler durch eine separate Lamellenkupplung ersetzt wurde und
- Figur 3: zeigt in einer Schemaskizze eine Möglichkeit einer Ansteuerung einer Antriebseinrichtung entsprechend der Erfindung mit einem elektronischen Kupplungssystem für Automatikgetriebe.

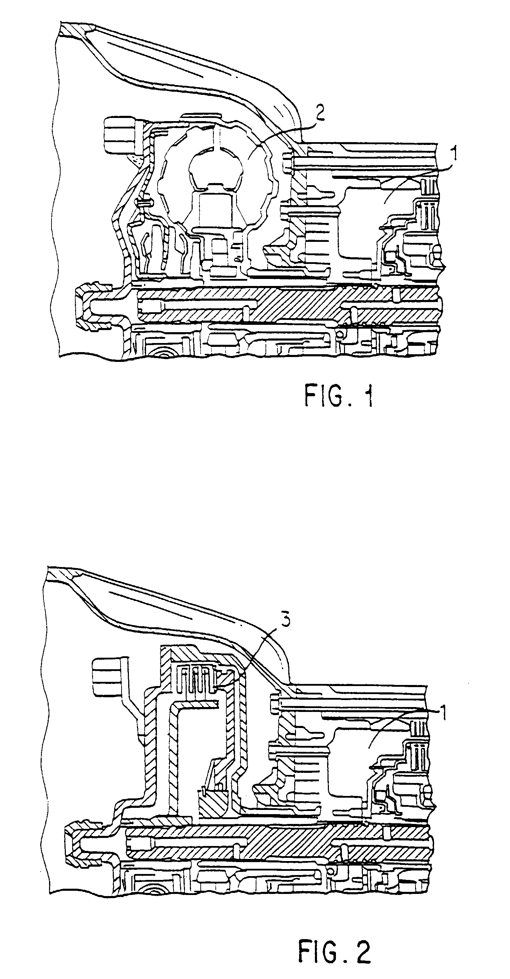

In Figur 1 ist mit der Bezugsziffer 1 ein nur teilweise gezeichnetes automatisch geschaltetes Planetengetriebe bezeichnet und mit 2 ein hydrodynamischer Wandler. In dieser Antriebseinrichtung für ein Kraftfahrzeug, gemäß dem Stand der Technik, dient der hydrodynamische Wandler 2 als Anfahrkupplung beim Übertragen eines Drehmoments von einer nicht gezeichneten Antriebsmaschine über den hydrodynamischen Wandler 2 zum automatisch geschalteten Planetengetriebe 1.

In Figur 2 ist der hydrodynamische Wandler entfallen und seine Funktion als Anfahrkupplung übernimmt eine separate Lamellenkupplung 3. Diese Lamellenkupplung 3 ist hier als Mehrscheibenkupplung ausgebildet. Gemäß der Erfindung entfällt die separate Lamellenkupplung 3 auch und als Anfahrkupplung wird eine Reibkupplung des Planetengetriebes 1 verwendet.

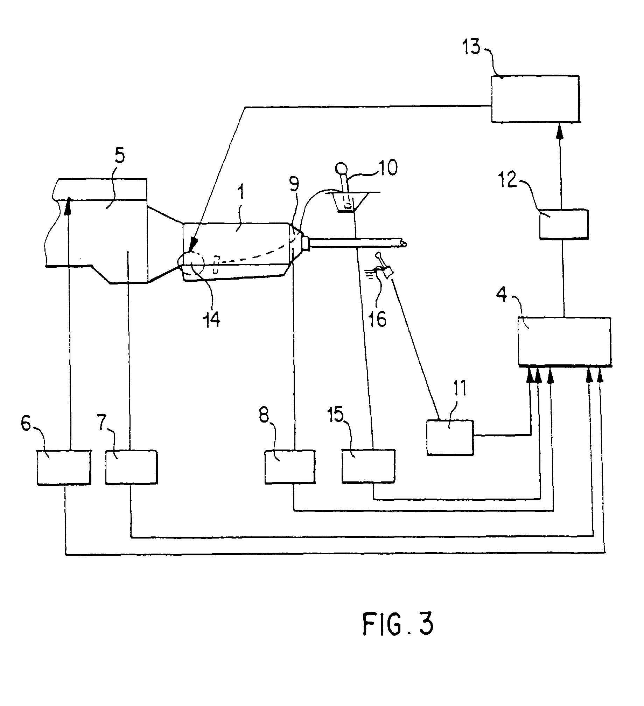

In Figur 3 ist dann die erfindungsgemäße Antriebseinrichtung für ein Kraftfahrzeug als Flußplan zur Erläuterung der automatischen Steuereinrichtung für die Reibkupplung des automatisch geschalteten Planetengetriebes 1 dargestellt. Ein Steuergerät 4 der elektronischen Getriebesteuerung erhält als Eingangsgrößen unter anderem eine Last 6 der Antriebsmaschine 5 und deren Drehzahl 7. Zusätzlich eine Drehzahl 8 einer Abtriebswelle 9 des automatisch geschalteten Planetengetriebes 1. Desweiteren eine eingelegte Fahrstufe 15 eines Wählhebels 10 für das Automatikgetriebe und ein Signal 11 eines Bremsschalters 16. Aus diesen Eingangsgrößen, die als Steuergrößen für das Automatikgetriebe verwendet werden, ergibt sich im Steuergerät 4 der elektronischen Getriebesteuerung eine Ausgangsgröße 12 für ein pulsweitenmoduliertes Ventil 13 zur Anfahrkupplungssteuerung. Die Anfahrkupplung ist als Anfahrreibkupplung ausgebildet und deren Position im automatisch geschalteten Planetengetriebe 1 ist durch den gestrichelt dargestellten Kreis 14 angedeutet gezeichnet.

## Patentansprüche

1. Antriebseinrichtung für ein Kraftfahrzeug mit einem automatisch geschalteten Planetengetriebe (1) zur Übertragung und Anpassung eines Drehmoments einer Antriebsmaschine an Betriebsbedingungen für den Antrieb des Kraftfahrzeugs, wobei das Planetengetriebe (1) in Kombination mit einer Reibkupplung als einziger Anfahrkupplung verwendet wird, dadurch gekennzeichnet, daß als Anfahrkupplung eine Reibkupplung des Planetengetriebes (1) verwendet wird.

2. Antriebseinrichtung nach Anspruch 1, dadurch gekennzeichnet, daß die Drehmomentübertragung über die Reibkupplung durch eine automatische Steuereinrichtung (4) für die Reibkupplung geregelt wird.

## Claims

1. A drive device for a motor vehicle comprising an automatic planetary gear (1) for transmitting and adapting a torque of an engine to the operating conditions for driving the vehicle, wherein the planetary gear (1) in combination with a friction clutch is used as the single starting clutch, characterised in that the starting clutch used is a friction clutch of the planetary gear (1).

2. A drive device according to claim 1, characterised in that the torque transmission via the friction clutch is controlled by an automatic control device (4) for the friction clutch.

## Revendications

1. Installation d'entraînement d'un véhicule automobile à boîte de vitesses planétaire à commutation automatique (1) pour transmettre et adapter le couple fourni par un moteur, aux conditions de fonctionnement pour l'entraînement du véhicule, la boîte de vitesses planétaire (1) étant utilisée en combinaison avec un embrayage à friction comme unique embrayage de démarrage,
caractérisée en ce que
l'embrayage de démarrage est l'embrayage à friction de la boîte de vitesses planétaire (1).

2. Installation selon la revendication 1,
caractérisée en ce que
la transmission du couple par l'embrayage à friction est régulée par une installation de commande automatique (4) de l'embrayage à friction.
